Europäisches Patentamt

European Patent Office

Office européen des brevets

(11) Publication number: **0 069 541**
**A2**

# (12) EUROPEAN PATENT APPLICATION

(21) Application number: **82303457.4**

(22) Date of filing: **01.07.82**

(51) Int. Cl.³: **G 06 F 7/548**

(30) Priority: **04.07.81 GB 8120732**

(43) Date of publication of application:
**12.01.83 Bulletin 83/2**

(84) Designated Contracting States:
**BE CH DE FR IT LI NL SE**

(71) Applicant: MARCONI AVIONICS LIMITED
Airport Works
Rochester Kent(GB)

(72) Inventor: Tucker, Christopher John
8, Cadogan Terrace
Pitsea Basildon Essex(GB)

(74) Representative: Hoste, Colin Francis et al,
Marconi House New Street
Chelmsford Essex CM1 1PL(GB)

(54) Data processing arrangement.

(57) A data processing arrangement is designed to transform the co-ordinates of a two dimensional data array into a modified array by applying a 2 × 2 matrix to the original co-ordinate pattern. In this way transformations such as rotation, shear, magnification and reflection can be achieved.

The arrangement is capable of handling large two dimensional arrays, each co-ordinate pair of which must be individually transformed. This is achieved by presenting the original co-ordinates X, Y to two dedicated multiplier devices as two data streams representing the two components X and Y of the co-ordinate pairs respectively. Each multiplier multiplies the co-ordinate presented to it by one of two selectable parameters and the outputs of the multipliers are summed together at an adder to produce new co-ordinates

$$X' = aX + bY \text{ and } Y' = cX + dY$$

where the parameters $a$ and $c$ are available to one multiplier and the parameters $b$ and $d$ are available to the other multiplier. The new co-ordinates $X'$ and $Y'$ appear at the output of the adder as a single interleaved data stream, and can be separated out as required. The arrangement is able to operate at very high speeds as fast dedicated multipliers are used, but at the same time it is very versatile as the nature of the transformation produced depends solely on the four parameters, which can be simply changed as necessary to produce a different transformation.

A modification of the arrangements extends the invention to a 3 × 3 matrix.

./...

Fig. 1.

## Data Processing Arrangement

This invention relates to a data processing arrangement which is suitable for processing data representative of a two dimensional array. The two dimensional array may be wholly synthetic in origin in that the data is deliberately organised into such an array to facilitate the further processing of it or it may be derived from an imaging device such as a television camera which views a scene to produce an output which is inherently representative of the two dimensional scene, or further it may represent simply a two dimensional picture or photograph, or a display of the kind presented on a television monitor.

Sometimes it is desired to modify the co-ordinates of the two dimensional array to transform them into a new array which is, for example, a rotated, sheared, magnified or reflected version of the original array.

The present invention seeks to provide a data processing arrangement which is suitable for this purpose.

According to this invention, a data processing arrangement for transforming the co-ordinates of a two dimensional data array to generate a modified array related to the original array in a predetermined manner includes means for receiving the two components of the co-ordinates as two data streams; a plurality of dedicated multiplier devices for multiplying each component in each data stream by two respective predetermined parameters to produce two products for each component; and summing means for summing a product related to one component with a product relating to the other component to produce one modified component of the transformed co-ordinates, and for summing another product relating to one component with another product relating to the other component to produce the other modified component of the transformed co-ordinates.

Preferably two multiplier devices are provided and means are also provided for storing two pairs of parameters such that one or other of the pairs can be selected for multiplication in dependence on whether said one modified component or said other modified component is to be generated.

The two modified components together represent the new co-ordinates of the modified two dimensional data array. It is envisaged that the data array will be expressed in terms of cartesian co-ordinates, in which case one component defines the abscissa (X) and the other component defines the ordinate (Y), but other co-ordinate systems, could be used.

In general terms, the data processing arrangement applies a 2 x 2 matrix $[A]$ to a column vector $\underline{C}$, which represents the original co-ordinate pattern, to produce a new column vector $\underline{C}'$ representing the transformed co-ordinate pattern.

$$\text{i.e.} \quad [A] = \begin{pmatrix} a & b \\ c & d \end{pmatrix} \tag{1}$$

$$\underline{C} = \begin{pmatrix} X \\ Y \end{pmatrix} \tag{2}$$

and $\quad \underline{C}' = [A] \, \underline{C}$

i.e. in the new co-ordinates, X', Y' are given by

$$\begin{pmatrix} X' \\ Y' \end{pmatrix} = \begin{pmatrix} a & b \\ c & d \end{pmatrix} \begin{pmatrix} X \\ Y \end{pmatrix} \tag{3}$$

where $\underline{a}$, $\underline{b}$, $\underline{c}$ and $\underline{d}$ are the elements of the transformation matrix. They are real parameters and their values define a particular transformation.

In a practical digital implementation of the invention, X and Y are the co-ordinates of 1's or 0's of the original picture, and X' and Y' are the transformed co-ordinates of the points specified by X, Y.

In general, the two dimensional data array is assumed to represent a picture of some kind. As previously explained, the picture may be real or synthetic or derived from data in a different format. The original picture is termed the input picture and the transformed version of it is termed the output picture. A number of different types of transformation can be readily achieved by multiplication with a 2 x 2 matrix. The following examples indicate the various possibilities.

An input picture can be rotated by multiplying the column vector representing the addresses of 1's or 0's by the following matrix:

$$[B] = \begin{pmatrix} \cos\alpha & -\sin\alpha \\ \sin\alpha & \cos\alpha \end{pmatrix} \qquad (4)$$

The output picture is a rotated version of the input picture, where the angle of rotation is $\alpha$ (positive $\alpha$ is defined as an anti-clockwise rotation about the zero of co-ordinates).

If the transformation matrix is of the form:

$$[C] = \begin{pmatrix} 1 & k \\ p & 1 \end{pmatrix} \qquad (5)$$

then the output picture is a sheared version of the input picture. The parameters $k$ and $p$ are the tangents of the shear angles in the X and Y directions respectively.

Similarly, if the transformation matrix is of the form

$$[D] = \begin{pmatrix} h & o \\ o & j \end{pmatrix} \qquad (6)$$

then the output picture is a magnified version of the input picture. The parameters $h$ and $j$ represent elongation factors in the X and Y directions respectively.

Finally, the matrix representing a reflection in the line $Y = X \tan \theta$ is

$$[E] = \begin{pmatrix} \cos 2\theta & \sin 2\theta \\ \sin 2\theta & -\cos 2\theta \end{pmatrix} \qquad (7)$$

It is possible to represent a combination of operations, e.g. to shear a picture and then rotate it, with a single 2 x 2 matrix. Combinations of operations can be defined by successive multiplication of the matrices defined in equations (4), (5), (6) and (7), in a specified order.

Example:

It is required to shear a picture consisting of points (X, Y) through an angle $\beta$ in the X direction, followed by a clockwise rotation by an angle $\alpha$,

then

$$\underbrace{\begin{pmatrix} \cos(-\alpha) & -\sin(-\alpha) \\ \sin(-\alpha) & \cos(-\alpha) \end{pmatrix}}_{\text{rotation }(-\alpha)} \underbrace{\begin{pmatrix} 1 & \tan(\beta) \\ 0 & 1 \end{pmatrix}}_{\text{Shear }\beta} \underbrace{\begin{pmatrix} X \\ Y \end{pmatrix}}_{\text{Input}} = \underbrace{\begin{pmatrix} X' \\ Y' \end{pmatrix}}_{\text{Output}}$$

which can be multiplied out to give

$$\underbrace{\begin{pmatrix} \cos(-\alpha) & \cos(-\alpha)\tan(\beta) - \sin(-\alpha) \\ \sin(-\alpha) & \cos(-\alpha) + \sin(-\alpha)\tan(\beta) \end{pmatrix}}_{\text{Shear followed by rotation}} \underbrace{\begin{pmatrix} X \\ Y \end{pmatrix}}_{\text{Input}} = \underbrace{\begin{pmatrix} X' \\ Y' \end{pmatrix}}_{\text{Output}}$$

This result demonstrates that a 2 x 2 matrix can represent any combination of the operations outlined earlier since the product of n, 2 x 2 matrices is a single 2 x 2 matrix.

To summarise, a general 2 x 2 matrix can be made to transform a binary input picture into another binary picture using the following operations or combinations of operations:

(1) Rotation

(2) Shear

(3) Magnification

(4) Reflection

A 2 x 2 matrix cannot in general be used to translate (i.e. shift) a picture, but to a limited extent shift can be simulated by off-setting each co-ordinate in the output picture by the same amount.

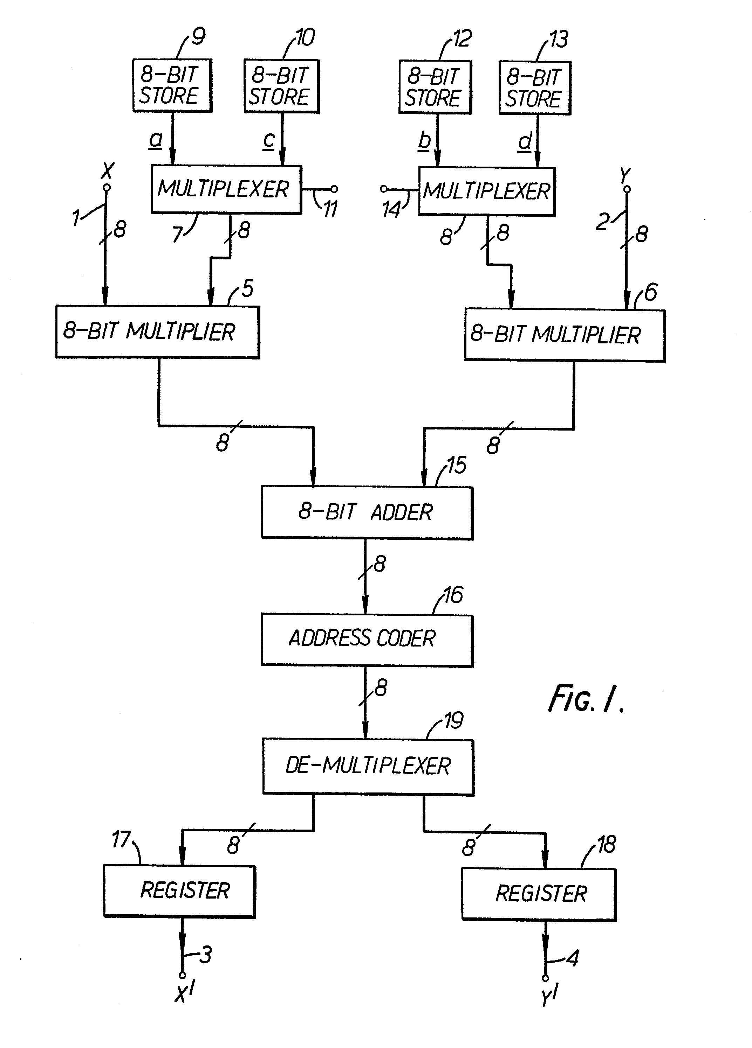

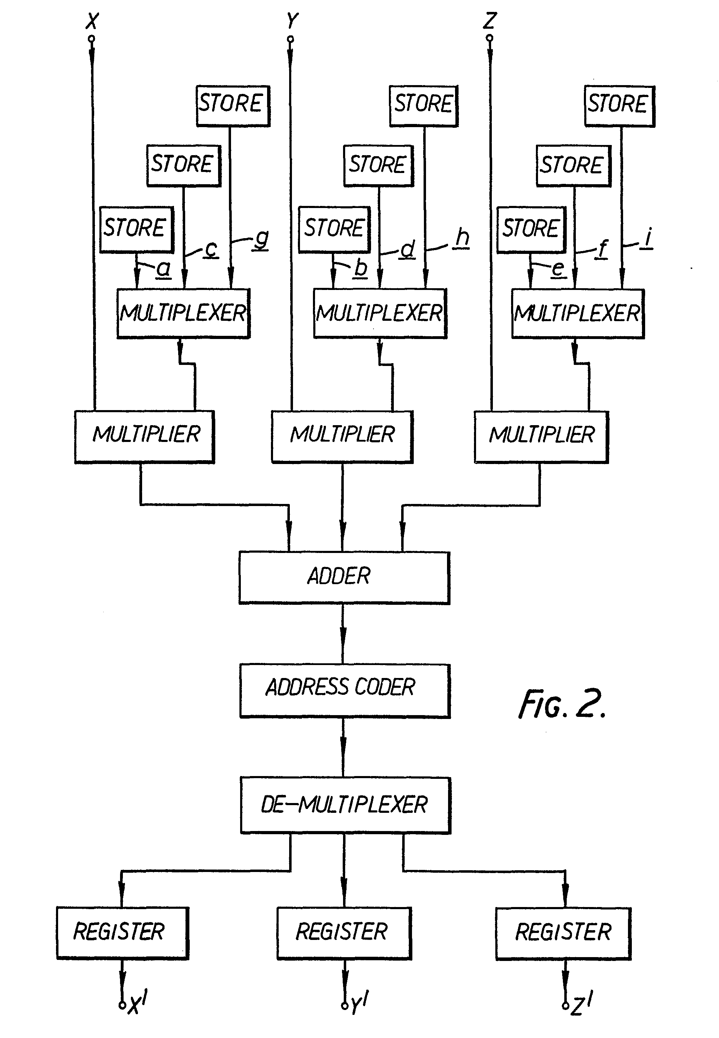

The invention is further described by way of example with reference to the accompanying drawings in which Figure 1 illustrates a data processing arrangement, and Figure 2 shows an extended form.

Referring to Figure 1, the X and Y co-ordinates of an original two dimensional data array, i.e. the co-ordinates of points in a picture, are applied to input terminals 1 and 2 respectively, each as an eight-bit digital word. The picture points are represented by cartesian co-ordinates and the X co-ordinate is presented to terminal 1, whereas the Y co-ordinate of the same picture point is presented to terminal 2. The actual nature of the picture point, i.e. whether it is black, white or colour of a particular hue does not form part of this invention, but clearly each co-ordinate will have a particular value associated with it which indicates the nature of the picture point and it is this value which is associated with the modified co-ordinates X' and Y' produced at the output terminals 3 and 4. Terminals 1 and 2 are each connected to a respective input of different multiplier devices 5 or 6, which receive as their other inputs a parameter selected by a respective multiplexer 7 or 8. Multiplexer 7 has access to stores 9 and 10. Store 9 holds an eight bit code word representing a parameter $a$, and store 10 holds an eight bit parameter $c$.

The multiplexer 7 operates to present parameter $\underline{a}$ or $\underline{c}$ to the multiplier device 5 in response to a control signal received over line 11. The multiplexer 8 provides an analogous function for parameters $\underline{b}$ and $\underline{d}$ which are stored in stores 12 and 13 respectively. Thus parameter $\underline{b}$ or $\underline{d}$ is routed to the multiplier 6 under the control of an input signal applied to terminal 14.

Each multiplier 5 and 6 is an eight bit multiplier and is a dedicated device. That is to say, the multiplication process is performed by hardware designed with that function in mind, and multiplication is not performed by a general purpose processor programmed to provide that function. This is an important point since in a typical two dimensional picture, there will be a very large number of individual picture elements. For example, a relatively coarse picture will have 256 resolvable points in a horizontal direction and a similar or somewhat smaller number in the vertical direction. Thus it will be apparent that the co-ordinate of all possible picture points must be multiplied by the multiplier devices 5 and 6, and that the speed of operation coupled with accuracy of operation is of particular importance.

The outputs of the two multiplier devices 5 and 6 are combined in an eight-bit adder 15. As is explained subsequently, the adder 15 produces the modified co-ordinate X' or Y' depending on which pairs of parameters have been selected by the multiplexers 7 and 8. These new co-ordinates are given an address by an address coder 16, which, in effect allocates each new co-ordinate an address stored in a register 17 or 18. Although the address coder 16 is not essential, its presence greatly facilitates the generation of the modified picture since the new co-ordinates can be assembled into a logical sequence and their temporary storage locations in a large store allocated on a rational basis. The de-multiplexer 19 merely separates out the modified X' co-ordinates and the modified Y' co-ordinates, and routes them into the appropriate registers 17 or 18.

Referring again to equation (3), it can be readily

expanded to give

$$X' = aX + bY \qquad\qquad (8)$$
$$Y' = cX + dY \qquad\qquad (9)$$

This expresses X' and Y' explicitly in terms of known parameters. As was explained previously, the parameters a, b, c and d may be composite variables defining one or more transformation,i.e. magnification and shear together. By using a composite parameter only a single matrix multiplication is performed on each co-ordinate pair, thereby reducing to an absolute minimum "rounding up" errors. Thus, with particular reference to equations (8) and (9), it will be seen that the adder 15 operates to produce X' when the multiplexers 7 and 8 select the parameters a and b. Conversely, the new co-ordinate Y' is generated when parameters c and d are selected.

As explained previously the incoming data streams consisting of X and Y values represent the co-ordinates of a two dimensional data array, and in practice each array contains a very large number indeed of individual picture points. For each pair of co-ordinates four multiplications are performed, two to produce X' and then two to produce Y'. Thus the multiplexers 7 and 8 are switched at a very high rate in synchronism with the incoming data streams, and the control signal which is provided on lines 11 and 14 is linked to a high frequency clock which also determines the rate at which the input picture is scanned.

The nature of the picture itself is not restricted to a particular format, although it may conveniently consist simply of a pattern of 1's and 0's, i.e. it may be a binary picture. This considerably reduces the amount of data which has to be associated with the new co-ordinates, but, in principle, multi level picture information can be handled.

Since the output picture co-ordinates are derived directly from the input picture co-ordinates by a matrix operation, it is likely that not all possible co-ordinates in the output picture will be assigned a picture point, thereby leaving localised gaps in the output picture. This can be overcome by interpolating between adjacent picture points to synthesise a value to fill the gap. However if the input

picture is binary in nature, i.e. consists only of an array of 1's and 0's this difficulty can be avoided entirely by initially allocating 0's to all possible co-ordinate points in the output picture, and by then writing in 1's at calculated points X' and Y' which correspond to X and Y co-ordinates at which a 1 was present in the input picture.

In any event the new co-ordinates X' and Y' must be linked with the original picture elements present at the original X and Y co-ordinates.

. The nature of the transformation produced by the data processing system is very versatile since simply by pre-loading the stores 9, 10, 12 and 13 with new values of parameters, a new transformation can be readily implemented. Although translation (i.e. linear shift) cannot be directly achieved by means of a 2 x 2 matrix, a pre-determined amount of translation can be effected by organising the address coder 16 in the appropriate fashion so that it allocates a "shifted" address instead of that directly indicated by the output of the adder 15.

Furthermore, many sets of stores can be provided, such that each set holds the parameters $\underline{a}$, $\underline{b}$, $\underline{c}$, $\underline{d}$ which are appropriate to a different predetermined transformation or combination of transformations. Then, the appropriate set can be accessed by the two multiplexers as required, to provide various transformations on demand.

The equation (3) can be extended to the form of a general 3 x 3 matrix

$$\begin{bmatrix} x' \\ y' \\ z' \end{bmatrix} = \begin{pmatrix} a & b & e \\ c & d & f \\ g & h & i \end{pmatrix} \begin{bmatrix} x \\ y \\ z \end{bmatrix} \qquad (10)$$

This matrix can be used to convert a two dimensional data array lying in one plane into a modified array lying in a different plane which can be angularly offset from the first plane. In this case the input z co-ordinates will all be zero (or have a constant value), but the output z' co-ordinates will have real values as calculated by the matrix. The 3 x 3 matrix can also be used to perform on a two-dimensional data array a more complex transformation than could be achieved by the original 2 x 2 matrix - this is achieved by assigning values to the parameters $\underline{e}$ and $\underline{f}$,

8                                                    0069541

and setting the parameters $\underline{g}$, $\underline{h}$ and $\underline{i}$ to zero, and thus
the equation (10) reduces to a 2 x 3 matrix. Alternatively
the full 3 x 3 matrix can be used upon a three dimensional
data array to generate a modified three dimensional data
array, and in this context the three dimensional array can
be regarded as a plurality of stacked two dimensional
arrays. It will be seen that equation (10) encompasses
equation (3), relating to a two dimensional array, as a
subset.

The implementation of equation 10 is shown in
Figure 2, which is simply an extension of the arrangement
shown in Figure 1. Blocks bearing similar labels perform
analogous functions, and in view of the preceding description
of Figure 1, the operation of Figure 2 is considered to be
self-explanatory.

## Claims

1.    A data processing arrangement for transforming the co-ordinates of a two dimensional data array to generate a modified array related to the original array in a predetermined manner including means for receiving the two components of the co-ordinates as two data streams; a plurality of dedicated multiplier devices for multiplying each component in each data stream by two respective predetermined parameters to produce two products for each component; and summing means for summing a product related to one component with a product relating to the other component to produce one modified component of the transformed co-ordinates, and for summing another product relating to one component with another product relating to the other component to produce the other modified component of the transformed co-ordinates.

2.    An arrangement as claimed in claim 1 and wherein two multiplier devices are provided and means are also provided for storing two pairs of parameterssuch that one or other of the pairs can be selected for multiplication in dependence on whether said one modified component or said other modified component is to be generated.

3.    An arrangement as claimed in claim 1, and wherein dedicated multiplierdevices are provided for multiplying each component in each data stream by a respective additional parameter to produce a third product for each component; and summing means for summing together the two said third products to produce a third component of the co-ordinates of said modified array.

4.    An arrangement as claimed in claim 1, including means for also receiving as a further data stream third components of the co-ordinates of a three  dimensional data array arranged as a plurality of two dimensional arrays; a plurality of dedicated multiplier devices for multiplying each component in each data stream by three respective predetermined parameters to produce three products for each component; and summing means for summing together three products related to different components to produce a first modified component of the transformed co-ordinates, and for summing together three other products related to different components to produce a second modified component of the transformed components, and for summing together the three remaining products related to different components to produce a third modified component of the transformed co-ordinates.

5. An arrangement as claimed in any of the preceding claims and wherein each multiplier device is associated with a multiplexer which selects an appropriate one of the available parameters in step with the rate at which the data streams are received.

6. An arrangement as claimed in any of the preceding claims and wherein said modified components are received by an address coder which determines where the modified components are to be temporarily stored.

Fig. 1.

Fig. 2.

0069541

2/2